# EUROPÄISCHE PATENTSCHRIFT

(11) **EP 2 486 641 B1**
(45) Veröffentlichungstag und Bekanntmachung des Hinweises auf die Patenterteilung: **09.11.2016**
(21) Anmeldenummer: 10757428.7
(22) Anmeldetag: 28.09.2010
(51) Int. Cl.: H02J 7/00

(54) **BATTERIESYSTEM UND VERFAHREN ZUM BALANCIEREN DER BATTERIEZELLEN EINES BATTERIESYSTEMS**
BATTERY SYSTEM AND METHOD FOR BALANCING THE BATTERY CELLS OF A BATTERY SYSTEM
SYSTÈME ACCUMULATEUR ET PROCÉDÉ D'ÉQUILIBRAGE DES PILES D'UN SYSTÈME ACCUMULATEUR

(30) Priorität: 09.10.2009 DE 102009045514
(43) Veröffentlichungstag der Anmeldung: 15.08.2012
(73) Patentinhaber: Samsung SDI Co., Ltd., Gyeonggi-do (KR); Robert Bosch GmbH, 70442 Stuttgart (DE)
(72) Erfinder: BUTZMANN, Stefan, 71717 Beilstein (DE)
(74) Vertreter: Bee, Joachim
(86) Internationale Anmeldenummer: PCT/EP2010/064296
(87) Internationale Veröffentlichungsnummer: WO 2011/042331

(56) Entgegenhaltungen:
- WO-A1-2007/145463
- JIAN CAO ET AL: "Battery balancing methods: A comprehensive review", VEHICLE POWER AND PROPULSION CONFERENCE, 2008. VPPC '08. IEEE, IEEE, PISCATAWAY, NJ, USA, 3. September 2008 (2008-09-03), Seiten 1-6, XP031363349, ISBN: 978-1-4244-1848-0
- GAI XIAO DONG ET AL: "Analysis on equalization circuit topology and system architecture for series-connected Ultra-capacitor", VEHICLE POWER AND PROPULSION CONFERENCE, 2008. VPPC '08. IEEE, IEEE, PISCATAWAY, NJ, USA, 3. September 2008 (2008-09-03), Seiten 1-5, XP031363304, ISBN: 978-1-4244-1848-0

## Beschreibung

Die Erfindung betrifft ein Batteriesystem und ein Verfahren zum Balancieren der Batteriezellen eines Batteriesystems gemäß den Oberbegriffen der unabhängigen Ansprüche.

### Stand der Technik

Es zeichnet sich ab, dass in Zukunft sowohl bei stationären Anwendungen (z.B. bei Windkraftanlagen) als auch in Fahrzeugen (z.B. in Hybrid- und Elektrofahrzeugen) vermehrt neue Batteriesysteme zum Einsatz kommen werden, an die sehr hohe Anforderungen bezüglich Zuverlässigkeit gestellt werden. Hintergrund für diese hohen Anforderungen ist, dass ein Ausfall der Batterie zu einem Ausfall des Gesamtsystems führen kann (z.B. ein Ausfall der Traktionsbatterie bei einem Elektrofahrzeug) oder sogar zu einem sicherheitsrelevanten Problem führen kann (bei Windkraftanlagen werden z.B. Batterien eingesetzt, um bei starkem Wind die Anlage durch eine Rotorblattverstellung vor unzulässigen Betriebszuständen zu schützen).

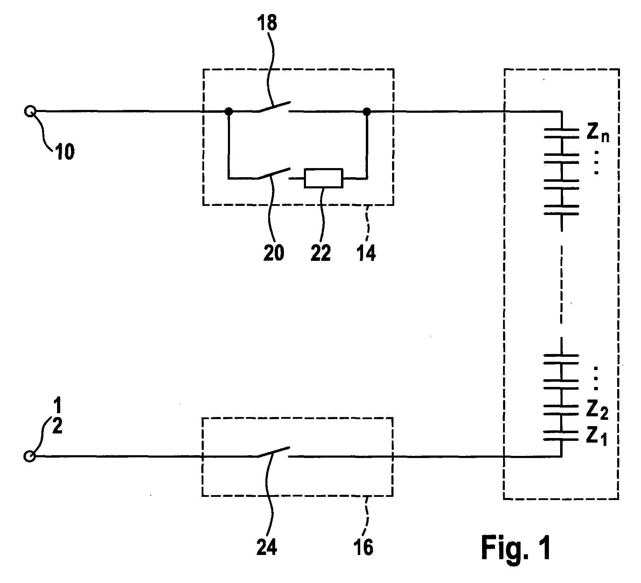

Fig. 1 zeigt ein Prinzipschaltbild eines Batteriesystems gemäß dem Stand der Technik. Zwischen dem Pluspol 10 und dem Minuspol 12 des Batteriesystems sind eine Lade- und Trenneinrichtung 14, eine Vielzahl von Batteriezellen Z₁, ..., Zₙ sowie optional eine weitere Trenneinrichtung 16 in Reihe geschaltet. Die Lade- und Trenneinrichtung 14 umfasst einen Trennschalter 18, einen Ladeschalter 20 sowie einen Ladewiderstand 22. Die optionale Trenneinrichtung 16 umfasst einen Trennschalter 24. Um die Anforderungen an die Leistungs- und Energiedaten mit dem Batteriesystem zu erfüllen, werden eine Vielzahl von Batteriezellen Z₁, ..., Zₙ in Reihe geschaltet werden; es ist auch bekannt, Batteriezellen oder in Reihe geschaltete Gruppen von Batteriezellen parallel zu schalten.

Ein Problem beim Einsatz vieler einzelner in Reihe geschalteter Batteriezellen besteht darin, dass die Batteriezellen nicht perfekt gleich sind, was zu ungleichen Zellspannungen führen kann, insbesondere über längere Zeitspannen von der Größenordnung der Lebensdauer der Batterie. Da insbesondere bei Lithium-Ionen-Batterien das Überladen oder das Tiefentladen einzelner Zellen zu einer irreversiblen Schädigung der Batterie führt, muss in regelmäßigen Zeitabständen ein sogenanntes Zell-Balancing durchgeführt werden. Zu diesem Zweck werden die einzelnen Zellen durch externe Beschaltungsmaßnahmen so ge- oder entladen, dass sie wieder gleiche Zellspannung besitzen.

Aus der WO 2007/145463 ist eine Schaltungsanordnungen bekannt, bei der die Ladung der einzelnen Batteriezellen von einer sog. "voltage detection and drive signal generation unit" erfasst und daraus ein Steuersignal zur Initiierung der Ladung der jeweilig zu gering geladenen Batteriezellen generiert wird.

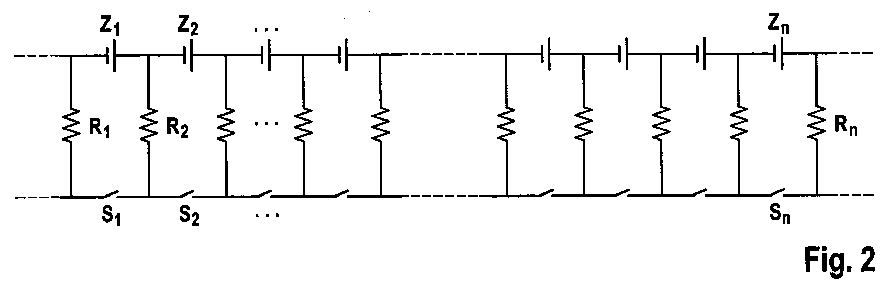

Auch ist dem Stand der Technik das sogenannte Widerstandsbalancing, bei dem ein Widerstand oder eine Widerstandskombination über Schalter einzelne Zellen so lange belastet, bis alle Zellen das gleiche Spannungsniveau erreicht haben bekannt. Fig. 2 zeigt ein Prinzipschaltbild eines Batteriesystems nach diesem Prinzip. Die in Reihe geschalteten Batteriezellen Z_{1,} ..., Zₙ werden über die Schalter S₁, ..., Sₙ mit den Widerständen R₁, ..., Rₙ belastet. Beispielsweise wird die Batteriezelle Z₁ über die Widerstände R₁ und R₂ entladen, wenn der Schalter S₁ eingeschaltet ist. Bei diesem Verfahren werden zunächst alle Zellspannungen gemessen, die Spannungen der einzelnen Zellen miteinander verglichen und über eine zentrale Steuersoftware die Schalter so lange eingeschaltet, bis die zu entladenden Zellen auf das gewünschte Niveau entladen sind.

Das Balancieren von Batteriezellen nach dem Stand der Technik hat den Nachteil, dass in der Batterie gespeicherte Energie durch Verlustleistung in den Widerständen in Wärme umgewandelt wird, um den gewünschten Ladungsausgleich zu erreichen.

Fig. 3 zeigt ein Prinzipschaltbild eines aus der DE 102008043611 A1 bekannten Batteriesystems, bei dem das Balancieren der Batteriezellen durch einen Ladungstransfer zwischen benachbarten Zellen erfolgt. In Zellen überschüssige Energie wird hier nicht in Wärme umgewandelt, um eine Angleichung aller Zellen zu erreichen, sondern von Zelle zu Zelle transferiert.

Die in Reihe geschalteten Batteriezellen Z₁ bis Z₃ werden beim Einschalten der in einer integrierten Schaltung 26 angeordneten Transistoren S₁ bis S₃ über die Dioden Dₐ₁ bis Dₐ₆ und die Induktivitäten Lₐ₁ bis Lₐ₄ balanciert. Dabei sind jeder Batteriezelle zwei Dioden und zwei Induktivitäten zugeordnet, wobei je zwei benachbarten Batteriezellen eine gemeinsame Induktivität zugeordnet ist. Beispielsweise sind der Batteriezelle Z₂ die Dioden Dₐ₃ und Dₐ₄ und die Induktivitäten Lₐ₂ und Lₐ₃ zugeordnet, wobei die Induktivität Lₐ₂ den Batteriezellen Z₁ und Z₂ gemeinsam zugeordnet ist und die Induktivität Lₐ₃ den Batteriezellen Z₂ und Z₃ gemeinsam zugeordnet ist.

Ein erstes Ende der ersten einer Batteriezelle zugeordneten Induktivität ist mit dem negativen Pol besagter Batteriezelle verbunden, und ein zweites Ende der ersten einer Batteriezelle zugeordneten Induktivität ist mit einem ersten Ende des besagter Batteriezelle zugeordneten Transistors verbunden. Ein erstes Ende der zweiten einer Batteriezelle zugeordneten Induktivität ist mit dem positiven Pol besagter Batteriezelle verbunden, und ein zweites Ende der zweiten einer Batteriezelle zugeordneten Induktivität ist mit einem zweiten Ende des besagter Batteriezelle zugeordneten Transistors verbunden. Beispielsweise ist ein erstes Ende der Induktivität Lₐ₂ mit dem negativen Pol der Batteriezelle Z₂ verbunden, ein zweites Ende der Induktivität Lₐ₂ ist mit einem ersten Ende des Transistors S₂ verbunden, ein erstes Ende der Induktivität Lₐ₃ ist mit dem positiven Pol der Batteriezelle Z₂ verbunden, und ein zweites Ende der Induktivität Lₐ₃ ist mit einem zweiten Ende des Transistors S₂ verbunden.

Die erste einer Batteriezelle zugeordnete Diode verbindet in Durchlassrichtung das erste Ende des besagter Batteriezelle zugeordneten Transistors mit dem positiven Pol besagter Batteriezelle, und die zweite einer Batteriezelle zugeordnete Diode verbindet in Durchlassrichtung den negativen Pol besagter Batteriezelle mit dem zweiten Ende des besagter Batteriezelle zugeordneten Transistors. Beispielsweise verbindet die Diode Dₐ₃ in Durchlassrichtung das erste Ende des Transistors S₂ mit dem positiven Pol der Batteriezelle Z₂, und die Diode Dₐ₄ verbindet in Durchlassrichtung den negativen Pol der Batteriezelle Z₂ mit dem zweiten Ende des Transistors S₂.

Wird der Transistor S₂ eingeschaltet, so wird ein Strom in den Induktivitäten Lₐ₃ und Lₐ₃ aufgebaut. Nach einer bestimmten Zeit wird der Transistor S₂ wieder ausgeschaltet. Die in den Induktivitäten Lₐ₂ und Lₐ₃ gespeicherte Energie wird nun wieder abgebaut. Besitzt beispielsweise die Batteriezelle Z₁ eine niedrigere Spannung als die Batteriezelle Z₂, so wird die in der Induktivität Lₐ₂ gespeicherte Energie über die der Batteriezelle Z₁ zugeordnete Diode Dₐ₂ in die Batteriezelle Z₁ abgebaut. Besitzt dagegen die Batteriezelle Z₂ eine niedrigere Spannung als die Batteriezelle Z₁, so wird die in der Induktivität Lₐ₂ gespeicherte Energie über die der Batteriezelle Z₂ zugeordnete Diode Dₐ₃ in die Batteriezelle Z₂ abgebaut.

Dieses Verfahren hat den Nachteil, dass der Source-Anschluss jedes Transistors über einen Potenzialbereich von -V bis +V floaten kann, wobei V die Spannung einer einzelnen Batteriezelle ist, was die Ansteuerung der Transistoren - insbesondere in integrierten Schaltungen - erheblich kompliziert.

Es ist daher Aufgabe der Erfindung, ein Batteriesystem und ein Verfahren zum Balancieren der Batteriezellen eines Batteriesystems anzugeben, welche diesen Nachteil überwinden. Insbesondere ist es Aufgabe der Erfindung, ein Batteriesystem und ein Verfahren zum Balancieren der Batteriezellen eines Batteriesystems anzugeben, bei welchen die in den Batteriezellen gespeicherte Energie nicht in Wärme umgewandelt, sondern von Batteriezelle zu Batteriezelle transferiert wird, und der Spannungsbereich, für den die Transistoren ausgelegt sein müssen, gegenüber dem aus der DE 102008043611 A1 bekannten Batteriesystem reduziert ist. Dadurch kann das Balancieren der Batteriezellen besonders vorteilhaft mit integrierten Schaltkreisen durchgeführt werden.

Erfindungsgemäß wird diese Aufgabe mittels eines Batteriesystems mit den im Anspruch 1 genannten Merkmalen und eines Verfahren mit den im Anspruch 6 genannten Merkmalen gelöst.

Das erfindungsgemäße Batteriesystem umfasst mindestens drei in Reihe geschaltete Batteriezellen, wobei eine erste Batteriezelle mit einer zweiten Batteriezelle verbunden ist und die zweite Batteriezelle mit einer dritten Batteriezelle verbunden ist, mindestens ein Schaltmittel, mindestens zwei Gleichrichtmittel, die dazu ausgelegt sind, nur in einer Richtung einen Stromfluss zuzulassen, und mindestens ein Energiespeichermittel zum zeitweiligen Speichern in dem Batteriesystem gespeicherter Energie,wobei das mindestens eine Energiespeichermittel durch die Sekundärwicklung mindestens eines Transformators gebildet und dazu ausgelegt ist, nach dem Einschalten des mindestens einen Schaltmittels in der zweiten Batteriezelle gespeicherte Energie zeitweilig zu speichern. Dabei ist ein erstes Ende des mindestens einen Schaltmittels mit einem ersten Pol der zweiten Batteriezelle leitend verbunden, ein zweites Ende des mindestens einen Schaltmittels mit einem ersten Ende der Sekundärwicklung des mindestens einen Transformators leitend verbunden und ein zweites Ende der Sekundärwicklung des mindestens einen Transformators mit einem zweiten Pol der zweiten Batteriezelle leitend verbunden. Das Batteriesystem ist dabei dadurch gekennzeichnet, dass ein erstes Ende der Primärwicklung des mindestens einen Transformators mit dem ersten Pol der zweiten Batteriezelle leitend verbunden ist. Die mindestens zwei Gleichrichtmittel sind derart angeordnet, dass ein erstes Ende des ersten Gleichrichtmittels mit einem zweiten Ende der Primärwicklung des mindestens einen Transformators leitend verbunden ist und ein zweites Ende des ersten Gleichrichtmittels mit dem ersten Pol der ersten Batteriezelle leitend verbunden ist. Ein erstes Ende des zweiten Gleichrichtmittels ist mit dem ersten Ende der Sekundärwicklung des mindestens einen Transformators leitend verbunden und ein zweites Ende des zweiten Gleichrichtmittels ist mit dem zweiten Pol der dritten Batteriezelle leitend verbunden, wodurch nach dem Ausschalten des mindestens einen Schaltmittels in dem mindestens einen Energiespeichermittel gespeicherte Energie der ersten Batteriezelle zugeführt wird, wenn das Verhältnis der Spannung der ersten Batteriezelle zu der Spannung der dritten Batteriezelle niedriger ist, als das Verhältnis der Soll-Spannung der ersten Batteriezelle zu der Soll-Spannung der dritten Batteriezelle und in dem mindestens einen Energiespeichermittel gespeicherte Energie der dritten Batteriezelle zugeführt wird, wenn das Verhältnis der Spannung der ersten Batteriezelle zu der Spannung der dritten Batteriezelle höher ist als das Verhältnis der Soll-Spannung der ersten Batteriezelle zu der Soll-Spannung der dritten Batteriezelle. Dadurch wird erreicht, dass die Batteriezellen balanciert werden, ohne dass in den Batteriezellen gespeicherte Energie gezielt in Wärmeenergie umgewandelt wird, und dass das mindestens eine Schaltmittel durch einen Transistor realisiert werden kann, dessen Source-Anschluss auf konstantem Potential bleibt und der daher nur eine einfache Ansteuerung benötigt.

Jedes der mindestens zwei Gleichrichtmittel kann eine Diode sein. Das mindestens eine Schaltmittel kann ein Transistor sein. Das mindestens eine Schaltmittel kann in einer integrierten Schaltung angeordnet sein.

Vorzugsweise ist das Verhältnis der Windungszahl der Primärwicklung des mindestens einen Transformators zu der Windungszahl der Sekundärwicklung des mindestens einen Transformators gleich dem Verhältnis der Soll-Spannung der dritten Batteriezelle zu der Soll-Spannung der ersten Batteriezelle.

Die Erfindung stellt ferner ein Verfahren zum Balancieren der Batteriezellen eines Batteriesystems bereit, wobei das Batteriesystem mindestens drei in Reihe geschaltete Batteriezellen umfasst, wobei eine erste Batteriezelle mit einer zweiten Batteriezelle verbunden ist und die zweite Batteriezelle mit einer dritten Batteriezelle verbunden ist, und mindestens ein Energiespeichermittel durch die Sekundärwicklung mindestens eines Transformators gebildet wird. Ein erstes Ende der Primärwicklung des mindestens einen Transformators wird mit dem ersten Pol der zweiten Batteriezelle elektrisch verbunden und ein zweites Ende der Primärwicklung des mindestens einen Transformators wird mit einem ersten Ende eines ersten Gleichrichtmittels elektrisch verbunden. Ein zweites Ende des ersten Gleichrichtmittels wird mit dem ersten Pol der ersten Batteriezelle elektrisch verbunden, und
ein erstes Ende eines zweiten Gleichrichtmittels wird mit dem ersten Ende der Sekundärwicklung des mindestens einen Transformators elektrisch verbunden. Ein zweites Ende des zweiten Gleichrichtmittels wird mit dem zweiten Pol der dritten Batteriezelle elektrisch verbunden, und ein erstes Ende des mindestens einen Schaltmittels wird mit einem ersten Pol der zweiten Batteriezelle elektrisch verbunden. Ein zweites Ende des mindestens einen Schaltmittels wird mit einem ersten Ende der Sekundärwicklung des mindestens einen Transformators elektrisch verbunden und ein zweites Ende der Sekundärwicklung des mindestens einen Transformators wird mit einem zweiten Pol der zweiten Batteriezelle elektrisch verbunden, wobei das Verfahren folgende Verfahrensschritte umfasst: Einschalten eines Schaltmittels, Speichern von in der zweiten Batterie gespeicherter Energie in einem Energiespeichermittel, Ausschalten des Schaltmittels, Zuführen in dem Energiespeichermittel gespeicherter Energie an die erste Batteriezelle mittels eines ersten Gleichrichtmittels, wenn das Verhältnis der Spannung der ersten Batteriezelle zu der Spannung der dritten Batteriezelle niedriger ist als das Verhältnis der Soll-Spannung der ersten Batteriezelle zu der Soll-Spannung der dritten Batteriezelle, und Zuführen in dem Energiespeichermittel gespeicherter Energie an die dritte Batteriezelle mittels eines zweiten Gleichrichtmittels, wenn das Verhältnis der Spannung der ersten Batteriezelle zu der Spannung der dritten Batteriezelle höher ist als das Verhältnis der Soll-Spannung der ersten Batteriezelle zu der Soll-Spannung der dritten Batteriezelle.

### Offenbarung der Erfindung

Die Erfindung wird im Folgenden mit Bezug auf die Zeichnungen anhand von Ausführungsbeispielen näher erläutert. Es zeigen:
Fig. 1 ein Prinzipschaltbild eines Batteriesystems mit einer Vielzahl von Batteriezellen gemäß dem Stand der Technik;
Fig. 2 ein Prinzipschaltbild eines Batteriesystems, in dem die Batteriezellen gemäß dem Stand der Technik balanciert werden;

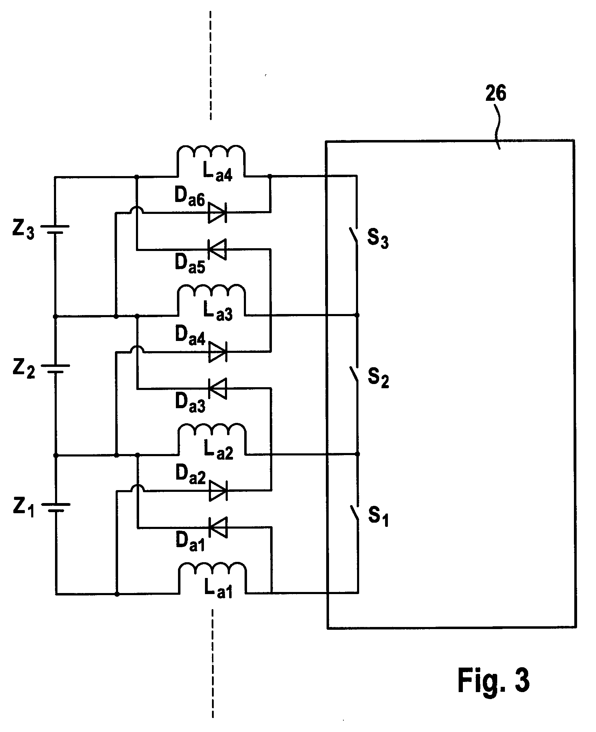

Fig. 3 ein Prinzipschaltbild eines Batteriesystems gemäß der DE 102008043611 A1; und
Fig. 4 eine Ausführungsform eines erfindungsgemäßen Batteriesystems.

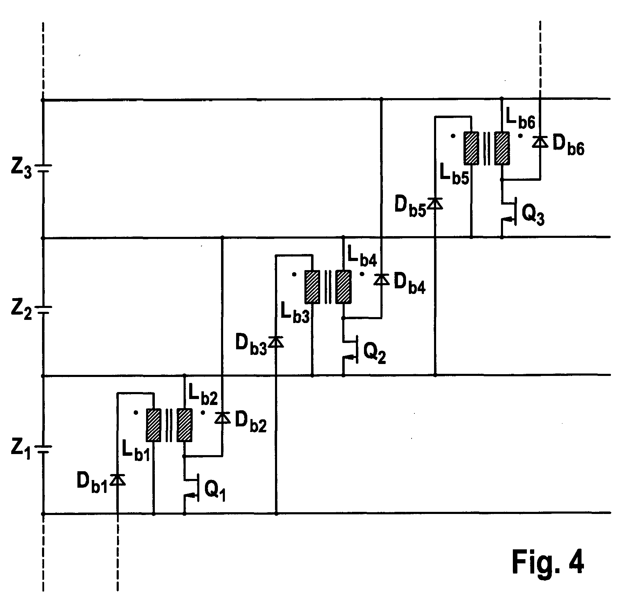

Fig. 4 zeigt eine Ausführungsform eines erfindungsgemäßen Batteriesystems. Drei Batteriezellen Z₁, Z₂ und Z₃ sind in Reihe geschaltet. Das Batteriesystem kann weitere Batteriezellen umfassen, von denen je drei benachbarte Batteriezellen entsprechend den Batteriezellen Z₁, Z₂ und Z₃ verschaltet sein können. Der positive Pol der Batteriezelle Z₁ ist mit dem negativen Pol der Batteriezelle Z₂ verbunden, und der positive Pol der Batteriezelle Z₂ ist mit dem negativen Pol der Batteriezelle Z₃ verbunden. Jeder Batteriezelle, die mit zwei Batteriezellen benachbart ist, sind ein Transformator mit einer Primärwicklung und einer Sekundärwicklung sowie zwei Dioden und ein Transistor zugeordnet. Beispielsweise sind der Batteriezelle Z₂ ein Transformator mit der Primärwicklung L_{b3} und der Sekundärwicklung L_{b4} sowie die Dioden D_{b3} und D_{b4} und der Transistor Q₂ zugeordnet.

Ein erstes Ende des Transistors Q₂ ist mit dem negativen Pol der Batteriezelle Z₂ verbunden, ein zweites Ende des Transistors Q₂ ist mit einem ersten Ende der Sekundärwicklung L_{b4} verbunden, und ein zweites Ende der Sekundärwicklung L_{b4} ist mit dem positiven Pol der Batteriezelle Z₂ verbunden.

Das dem ersten Ende der Sekundärwicklung L_{b4} entsprechende erste Ende der Primärwicklung L_{b3} ist mit dem negativen Pol der Batteriezelle Z₂ verbunden, ein zweites Ende der Primärwicklung L_{b3} ist mit einem ersten Ende der Diode D_{b3} verbunden, und ein zweites Ende der Diode D_{b3} ist mit dem negativen Pol der Batteriezelle Z₁ verbunden.

Ein erstes Ende der Diode D_{b4} ist mit dem ersten Ende der Sekundärwicklung L_{b4} verbunden, und ein zweites Ende der Diode D_{b4} ist mit dem positiven Pol der Batteriezelle Z₃ verbunden.

Die Durchlassrichtung der Dioden ist so gewählt, dass die Batteriezelle Z₁ über die Diode D_{b3} geladen aber nicht entladen werden kann und dass die Batteriezelle Z₃ über die Diode D_{b4} geladen aber nicht entladen werden kann.

Wird der Transistor Q₂ eingeschaltet, so wird ein Strom in der Induktivität L_{b4} aufgebaut. Nach einer bestimmten Zeit wird der Transistor Q₂ wieder ausgeschaltet. Die in der Induktivität L_{b4} gespeicherte Energie wird nun wieder abgebaut. Besitzt beispielsweise die Batteriezelle Z₁ eine niedrigere Spannung als die Batteriezelle Z₃, so wird die in der Induktivität L_{b4} gespeicherte Energie über die Diode D_{b3} in die Batteriezelle Z₁ abgebaut. Besitzt dagegen die Batteriezelle Z₃ eine niedrigere Spannung als die Batteriezelle Z₁, so wird die in der Induktivität L_{b4} gespeicherte Energie über die Diode D_{b4} in die Batteriezelle Z₃ abgebaut. Somit wird Energie in die geringer geladene Batteriezelle transferiert. Durch geeignete Betätigung der Transistoren Q₁, Q₂, Q₃, ... können so sämtliche Batteriezellen miteinander balanciert werden.

Die obige Beschreibung geht davon aus, dass wie üblich sämtliche Batteriezellen dieselbe Soll-Spannung aufweisen. Es ist jedoch auch möglich, Batteriezellen mit verschiedenen Soll-Spannungen zu balancieren; in diesem Fall muss das Verhältnis der Windungszahl der Primärwicklung L_{b3} zu der Windungszahl der Sekundärwicklung L_{b4} gleich dem Verhältnis der Soll-Spannung der Batteriezelle Z₃ zu der Soll-Spannung der Batteriezelle Z₁ sein.

## Patentansprüche

1. Batteriesystem, umfassend
mindestens drei in Reihe geschaltete Batteriezellen (Z₁, Z₂, Z₃), wobei eine erste Batteriezelle (Z₁) mit einer zweiten Batteriezelle (Z₂) verbunden ist und die zweite Batteriezelle (Z₂) mit einer dritten Batteriezelle (Z₃) verbunden ist;
mindestens ein Schaltmittel (Q₂);
mindestens zwei Gleichrichtmittel (D_{b3}, D_{b4}), die dazu ausgelegt sind, nur in einer Richtung einen Stromfluss zuzulassen; und
mindestens ein Energiespeichermittel (L_{b4}) zum zeitweiligen Speichern in dem Batteriesystem gespeicherter Energie,
wobei,
das mindestens eine Energiespeichermittel (L_{b4}) durch die Sekundärwicklung (L_{b4}) mindestens eines Transformators gebildet und,dazu ausgelegt ist, nach dem Einschalten des mindestens einen Schaltmittels (Q₂) in der zweiten Batteriezelle (Z₂) gespeicherte Energie zeitweilig zu speichern, wobei
ein erstes Ende des mindestens einen Schaltmittels (Q₂) mit einem ersten Pol der zweiten Batteriezelle (Z₂) leitend verbunden ist, ein zweites Ende des mindestens einen Schaltmittels (Q₂) mit einem ersten Ende der Sekundärwicklung (L_{b4}) des mindestens einen Transformators leitend verbunden ist und ein zweites Ende der Sekundärwicklung (L_{b4}) des mindestens einen Transformators mit einem zweiten Pol der zweiten Batteriezelle (Z₂) leitend verbunden ist,
dadurch gekenzeichnet, dass
ein erstes Ende der Primärwicklung (L_{b3}) des mindestens einen Transformators, mit dem ersten Pol der zweiten Batteriezelle (Z₂) leitend verbunden ist,
und die mindestens zwei Gleichrichtmittel (D_{b3}, D_{b4}) derart angeordnet sind, dass
ein erstes Ende des ersten Gleichrichtmittels (D_{b3}) mit einem zweiten Ende der Primärwicklung (L_{b3}) des mindestens einen Transformators leitend verbunden ist und ein zweites Ende des ersten Gleichrichtmittels (D_{b3}) mit dem ersten Pol der ersten Batteriezelle (Z₁) leitend verbunden ist, und
ein erstes Ende eines zweiten Gleichrichtmittels (D_{b4}) mit dem ersten Ende der Sekundärwicklung (L_{b4}) des mindestens einen Transformators leitend verbunden ist und ein zweites Ende des zweiten Gleichrichtmittels (D_{b4}) mit dem zweiten Pol der dritten Batteriezelle (Z₃) leitend verbunden ist,
wodurch nach dem Ausschalten des mindestens einen Schaltmittels (Q₂) in dem mindestens einen Energiespeichermittel (L_{b4}) gespeicherte Energie der ersten Batteriezelle (Z₁) zugeführt wird, wenn das Verhältnis der Spannung der ersten Batteriezelle (Z₁) zu der Spannung der dritten Batteriezelle (Z₃) niedriger ist als das Verhältnis der Soll-Spannung der ersten Batteriezelle (Z₁) zu der Soll-Spannung der dritten Batteriezelle (Z₃), und in dem mindestens einen Energiespeichermittel (L_{b4}) gespeicherte Energie der dritten Batteriezelle (Z₃) zugeführt wird, wenn das Verhältnis der Spannung der ersten Batteriezelle (Z₁) zu der Spannung der dritten Batteriezelle (Z₃) höher ist als das Verhältnis der Soll-Spannung der ersten Batteriezelle (Z₁) zu der Soll-Spannung der dritten Batteriezelle (Z₃).

2. Batteriesystem nach Anspruch 1, wobei jedes der mindestens zwei Gleichrichtmittel (D_{b3}, D_{b4}) eine Diode (D_{b3}, D_{b4}) ist.

3. Batteriesystem nach einem der vorhergehenden Ansprüche, wobei das mindestens eine Schaltmittel (Q₂) ein Transistor (Q₂) ist.

4. Batteriesystem nach einem der vorhergehenden Ansprüche, wobei das mindestens eine Schaltmittel (Q₂) in einer integrierten Schaltung angeordnet ist.

5. Batteriesystem nach Anspruch 1, wobei das Verhältnis der Windungszahl der Primärwicklung (L_{b3}) des mindestens einen Transformators zu der Windungszahl der Sekundärwicklung (L_{b4}) des mindestens einen Transformators gleich dem Verhältnis der Soll-Spannung der dritten Batteriezelle (Z₃) zu der Soll-Spannung der ersten Batteriezelle (Z₁) ist.

6. Verfahren zum Balancieren der Batteriezellen (Z₁, Z₂, Z₃) eines Batteriesystems, wobei das Batteriesystem mindestens drei in Reihe geschaltete Batteriezellen (Z₁, Z₂, Z₃) umfasst, wobei eine erste Batteriezelle (Z₁) mit einer zweiten Batteriezelle (Z₂) verbunden ist und die zweite Batteriezelle (Z₂) mit einer dritten Batteriezelle (Z₃) verbunden ist, und mindestens ein Energiespeichermittel (L_{b4}) durch die Sekundärwicklung (L_{b4}) mindestens eines Transformators gebildet wird und ein erstes Ende der Primärwicklung (L_{b3}) des mindestens einen Transformators mit dem ersten Pol der zweiten Batteriezelle (Z₂) elektrisch verbunden wird und ein zweites Ende der Primärwicklung (L_{b3}) des mindestens einen Transformators mit einem ersten Ende eines ersten Gleichrichtmittels (D_{b3}) elektrisch verbunden wird und ein zweites Ende des ersten Gleichrichtmittels (D_{b3}) mit dem ersten Pol der ersten Batteriezelle (Z₁) elektrisch verbunden wird, und ein erstes Ende eines zweiten Gleichrichtmittels (D_{b4}) mit dem ersten Ende der Sekundärwicklung (L_{b4}) des mindestens einen Transformators elektrisch verbunden wird und ein zweites Ende des zweiten Gleichrichtmittels (D_{b4}) mit dem zweiten Pol der dritten Batteriezelle (Z₃) elektrisch verbunden wird, (Alter Anspruch 8) und ein erstes Ende des mindestens einen Schaltmittels (Q₂) mit einem ersten Pol der zweiten Batteriezelle (Z₂) elektrisch verbunden wird und ein zweites Ende des mindestens einen Schaltmittels (Q₂) mit einem ersten Ende der Sekundärwicklung (L_{b4}) des mindestens einen Transformators elektrisch verbunden wird und ein zweites Ende der Sekundärwicklung (L_{b4}) des mindestens einen Transformators mit einem zweiten Pol der zweiten Batteriezelle (Z₂) elektrisch verbunden wird, wobei das Verfahren folgende Verfahrensschritte umfasst:
Einschalten eines Schaltmittels (Q₂);
Speichern von in der zweiten Batterie gespeicherter Energie in einem Energiespeichermittel (L_{b4});
Ausschalten des Schaltmittels (Q₂);
Zuführen in dem Energiespeichermittel (L_{b4}) gespeicherter Energie an die erste Batteriezelle (Z₁) mittels eines ersten Gleichrichtmittels (D_{b3}), wenn das Verhältnis der Spannung der ersten Batteriezelle (Z₁) zu der Spannung der dritten Batteriezelle (Z₃) niedriger ist als das Verhältnis der Soll-Spannung der ersten Batteriezelle (Z₁) zu der Soll-Spannung der dritten Batteriezelle (Z₃); und
Zuführen in dem Energiespeichermittel (L_{b4}) gespeicherter Energie an die dritte Batteriezelle (Z₃) mittels eines zweiten Gleichrichtmittels (D_{b4}), wenn das Verhältnis der Spannung der ersten Batteriezelle (Z₁) zu der Spannung der dritten Batteriezelle (Z₃) höher ist als das Verhältnis der Soll-Spannung der ersten Batteriezelle (Z₁) zu der Soll-Spannung der dritten Batteriezelle (Z₃).

## Claims

1. Battery system, comprising
at least three series-connected battery cells (Z₁, Z₂, Z₃), wherein a first battery cell (Z₁) is connected to a second battery cell (Z₂), and the second battery cell (Z₂) is connected to a third battery cell (Z₃);
at least one switching means (Q₂);
at least two rectifying means (D_{b3}, D_{b4}) which are designed to permit a current flow only in one direction; and
at least one energy storage means (L_{b4}) for temporarily storing energy stored in the battery system,
wherein
the at least one energy storage means (L_{b4}) is formed by the secondary winding (L_{b4}) of at least one transformer and is designed to temporarily store energy stored in the second battery cell (Z₂) after the switching-on of the at least one switching means (Q₂), wherein
a first end of the at least one switching means (Q₂) is conductively connected to a first pole of the second battery cell (Z₂), a second end of the at least one switching means (Q₂) is conductively connected to a first end of the secondary winding (L_{b4}) of the at least one transformer, and a second end of the secondary winding (L_{b4}) of the at least one transformer is conductively connected to a second pole of the second battery cell (Z₂),
**characterized in that**
a first end of the primary winding (L_{b3}) of the at least one transformer is conductively connected to the first pole of the second battery cell (Z₂),
and the at least two rectifying means (D_{b3}, D_{b4}) are arranged in such a way that
a first end of the first rectifying means (D_{b3}) is conductively connected to a second end of the primary winding (L_{b3}) of the at least one transformer, and a second end of the first rectifying means (D_{b3}) is conductively connected to the first pole of the first battery cell (Z₁), and
a first end of a second rectifying means (D_{b4}) is conductively connected to the first end of the secondary winding (L_{b4}) of the at least one transformer, and a second end of the second rectifying means (D_{b4}) is conductively connected to the second pole of the third battery cell (Z₃),
whereby after the switching-off of the at least one switching means (Q₂) energy stored in the at least one energy storage means (L_{b4}) is fed to the first battery cell (Z₁) if the ratio of the voltage of the first battery cell (Z₁) to the voltage of the third battery cell (Z₃) is lower than the ratio of the setpoint voltage of the first battery cell (Z₁) to the setpoint voltage of the third battery cell (Z₃), and energy stored in the at least one energy storage means (L_{b4}) is fed to the third battery cell (Z₃) if the ratio of the voltage of the first battery cell (Z₁) to the voltage of the third battery cell (Z₃) is higher than the ratio of the setpoint voltage of the first battery cell (Z₁) to the setpoint voltage of the third battery cell (Z₃).

2. Battery system according to Claim 1, wherein each of the at least two rectifying means (D_{b3}, D_{b4}) is a diode (D_{b3}, D_{b4}).

3. Battery system according to either of the preceding claims, wherein the at least one switching means (Q₂) is a transistor (Q₂).

4. Battery system according to any of the preceding claims, wherein the at least one switching means (Q₂) is arranged in an integrated circuit.

5. Battery system according to Claim 1, wherein the ratio of the number of turns of the primary winding (L_{b3}) of the at least one transformer to the number of turns of the secondary winding (L_{b4}) of the at least one transformer is equal to the ratio of the setpoint voltage of the third battery cell (Z₃) to the setpoint voltage of the first battery cell (Z₁).

6. Method for balancing the battery cells (Z₁, Z₂, Z₃) of a battery system, wherein the battery system comprises at least three series-connected battery cells (Z₁, Z₂, Z₃), wherein a first battery cell (Z₁) is connected to a second battery cell (Z₂), and the second battery cell (Z₂) is connected to a third battery cell (Z₃), and at least one energy storage means (L_{b4}) is formed by the secondary winding (L_{b4}) of at least one transformer, and a first end of the primary winding (L_{b3}) of the at least one transformer is electrically connected to the first pole of the second battery cell (Z₂), and a second end of the primary winding (L_{b3}) of the at least one transformer is electrically connected to a first end of a first rectifying means (D_{b3}), and a second end of the first rectifying means (D_{b3}) is electrically connected to the first pole of the first battery cell (Z₁), and a first end of a second rectifying means (D_{b4}) is electrically connected to the first end of the secondary winding (L_{b4}) of the at least one transformer, and a second end of the second rectifying means (D_{b4}) is electrically connected to the second pole of the third battery cell (Z₃), (old Claim 8), and a first end of the at least one switching means (Q₂) is electrically connected to a first pole of the second battery cell (Z₂), and a second end of the at least one switching means (Q₂) is electrically connected to a first end of the secondary winding (L_{b4}) of the at least one transformer, and a second end of the secondary winding (L_{b4}) of the at least one transformer is electrically connected to a second pole of the second battery cell (Z₂), wherein the method comprises the following method steps:
switching on a switching means (Q₂);
storing energy stored in the second battery in an energy storage means (L_{b4});
switching off the switching means (Q₂);
feeding energy stored in the energy storage means (L_{b4}) to the first battery cell (Z₁) by means of a first rectifying means (D_{b3}) if the ratio of the voltage of the first battery cell (Z₁) to the voltage of the third battery cell (Z₃) is lower than the ratio of the setpoint voltage of the first battery cell (Z₁) to the setpoint voltage of the third battery cell (Z₃); and
feeding energy stored in the energy storage means (L_{b4}) to the third battery cell (Z₃) by means of a second rectifying means (D_{b4}) if the ratio of the voltage of the first battery cell (Z₁) to the voltage of the third battery cell (Z₃) is higher than the ratio of the setpoint voltage of the first battery cell (Z₁) to the setpoint voltage of the third battery cell (Z₃).

## Revendications

1. Système d'accumulateur, comprenant
au moins trois cellules d'accumulateur (Z₁, Z₂, Z₃) branchées en série, dans lequel une première cellule d'accumulateur (Z₁) est reliée avec une deuxième cellule d'accumulateur (Z₂) et la deuxième cellule d'accumulateur (Z₂) est reliée avec une troisième cellule d'accumulateur (Z₃),
au moins un moyen de commutation (Q₂) ;
au moins deux moyens de redresseur (D_{b3}, D_{b4}), qui sont conçus afin d'autoriser un flux d'électricité dans seulement une direction ; et
au moins un moyen de stockage d'énergie (L_{b4}) pour stocker temporairement de l'énergie stockée dans le système d'accumulateur,
dans lequel
l'au moins un moyen de stockage d'énergie (L_{b4}) est formé par l'enroulement secondaire (L_{b4}) d'au moins un transformateur et est conçu afin de stocker temporairement, après la mise sous tension de l'au moins un moyen de commutation (Q₂), l'énergie stockée dans la deuxième cellule d'accumulateur (Z₂), dans lequel
une première extrémité de l'au moins un moyen de commutation (Q₂) est reliée de manière conductrice avec un premier pôle de la deuxième cellule d'accumulateur (Z₂), une deuxième extrémité de l'au moins un moyen de commutation (Q₂) est reliée de manière conductrice avec une première extrémité de l'enroulement secondaire (L_{b4}) de l'au moins un transformateur et une deuxième extrémité de l'enroulement secondaire (L_{b4}) de l'au moins un transformateur est reliée de manière conductrice avec un deuxième pôle de la deuxième cellule d'accumulateur (Z₂),
**caractérisé en ce que**
une première extrémité de l'enroulement primaire (L_{b3}) de l'au moins un transformateur est reliée de manière conductrice avec un premier pôle de la deuxième cellule d'accumulateur (Z₂),
et les au moins deux moyens de redresseur (D_{b3}, D_{b4}) sont disposés de telle sorte que
une première extrémité du premier moyen de redresseur (D_{b3}) est reliée de manière conductrice avec une deuxième extrémité de l'enroulement primaire (L_{b3}) de l'au moins un transformateur et une deuxième extrémité du premier moyen de redresseur (D_{b3}) est reliée de manière conductrice avec le premier pôle de la première cellule d'accumulateur (Z₁), et
une première extrémité d'un deuxième moyen de redresseur (D_{b4}) est reliée de manière conductrice avec la première extrémité de l'enroulement secondaire (L_{b4}) de l'au moins un transformateur et une deuxième extrémité du deuxième moyen de redresseur (D_{b4}) est reliée de manière conductrice avec le deuxième pôle de la troisième cellule d'accumulateur (Z₃),
moyennant quoi après la mise hors tension de l'au moins un moyen de commutation (Q₂) l'énergie stockée dans l'au moins un moyen de stockage d'énergie (L_{b4}) est alimentée dans la première cellule d'accumulateur (Z₁), lorsque le rapport de la tension de la première cellule d'accumulateur (Z₁) sur la tension de la troisième cellule d'accumulateur (Z₃) est inférieur au rapport de la tension de consigne de la première cellule d'accumulateur (Z₁) sur la tension de consigne de la troisième cellule d'accumulateur (Z₃) et l'énergie stockée dans l'au moins un moyen de stockage d'énergie (L_{b4}) est alimentée dans la troisième cellule d'accumulateur (Z₃), lorsque le rapport de la tension de la première cellule d'accumulateur (Z₁) sur la tension de la troisième cellule d'accumulateur (Z₃) est supérieur au rapport de la tension de consigne de la première cellule d'accumulateur (Z₁) sur la tension de consigne de la troisième cellule d'accumulateur (Z₃).

2. Système d'accumulateur selon la revendication 1, dans lequel chacun des au moins deux moyens de redresseur ( D_{b3}, D_{b4}) est une diode (D_{b3}, D_{b4}).

3. Système d'accumulateur selon une des revendications précédentes, dans lequel l'au moins un moyen de commutation (Q₂) est un transistor (Q₂).

4. Système d'accumulateur selon une des revendications précédentes, dans lequel l'au moins un moyen de commutation (Q₂) est disposé dans un circuit intégré.

5. Système d'accumulateur selon la revendication 1, dans lequel le rapport du nombre d'enroulements de l'enroulement primaire (L_{b3}) de l'au moins un transformateur sur le nombre d'enroulements de l'enroulement secondaire (L_{b4}) de l'au moins un transformateur est égal au rapport de la tension de consigne de la troisième cellule d'accumulateur (Z₃) sur la tension de consigne de la première cellule d'accumulateur (Z₁).

6. Procédé d'équilibrage des cellules d'accumulateur (Z₁, Z₂, Z₃) d'un système d'accumulateur, dans lequel le système d'accumulateur comprend au moins trois cellules d'accumulateur (Z₁, Z₂, Z₃) branchées en série, dans lequel une première cellule d'accumulateur (Z₁) est reliée avec une deuxième cellule d'accumulateur (Z₂) et la deuxième cellule d'accumulateur (Z₂) est reliée avec une troisième cellule d'accumulateur (Z₃), et au moins un moyen de stockage d'énergie (L_{b4}) est formé par l'enroulement secondaire (L_{b4}) de l'au moins un transformateur et une première extrémité de l'enroulement primaire (L_{b3}) de l'au moins un transformateur est reliée électriquement avec le premier pôle de la deuxième cellule d'accumulateur (Z₂) et une deuxième extrémité de l'enroulement primaire (L_{b3}) de l'au moins un transformateur est reliée électriquement avec une première extrémité d'un premier moyen de redresseur (D_{b3}) et une deuxième extrémité du premier moyen de redresseur (D_{b3}) est reliée électriquement avec le premier pôle de la première cellule d'accumulateur (Z₁), et une première extrémité d'un deuxième moyen de redresseur (D_{b4}) est reliée électriquement avec la première extrémité de l'enroulement secondaire (L_{b4}) de l'au moins un transformateur et une deuxième extrémité du deuxième moyen de redresseur (D_{b4}) est reliée électriquement avec le deuxième pôle de la troisième cellule d'accumulateur (Z₃), (ancienne revendication 8) et une première extrémité de l'au moins un moyen de commutation (Q₂) est reliée électriquement avec un premier pôle de la deuxième cellule d'accumulateur (Z₂) et une deuxième extrémité de l'au moins un moyen de commutation (Q₂) est reliée électriquement avec une première extrémité de l'enroulement secondaire (L_{b4}) de l'au moins un transformateur et une deuxième extrémité de l'enroulement secondaire (L_{b4}) de l'au moins un transformateur est reliée électriquement avec un deuxième pôle de la deuxième cellule d'accumulateur (Z₂), dans lequel le procédé comprend les étapes de procédé suivantes :
mettre sous tension un moyen de commutation (Q₂) ;
stocker de l'énergie stockée dans la deuxième batterie dans un moyen de stockage d'énergie (L_{b4}) ;
mettre hors tension le moyen de commutation(Q₂) ;
alimenter l'énergie stockée dans le moyen de stockage d'énergie (L_{b4}) dans la première cellule d'accumulateur (Z₁) au moyen d'un premier moyen de redresseur (D_{b3}), lorsque le rapport de la tension de la première cellule d'accumulateur (Z₁) sur la tension de la troisième cellule d'accumulateur (Z₃) est inférieur au rapport de la tension de consigne de la première cellule d'accumulateur (Z₁) sur la tension de consigne de la troisième cellule d'accumulateur (Z₃) ; et
alimenter l'énergie stockée dans le moyen de stockage d'énergie (L_{b4}) dans la troisième cellule d'accumulateur (Z₃) au moyen d'un deuxième moyen de redresseur (D_{b4}), lorsque le rapport de la tension de la première cellule d'accumulateur (Z₁) sur la tension de la troisième cellule d'accumulateur (Z₃) est supérieur au rapport de la tension de consigne de la première cellule d'accumulateur (Z₁) sur la tension de consigne de la troisième cellule d'accumulateur (Z₃).
